# EUROPEAN PATENT APPLICATION

(11) **EP 2 463 842 A2**
(43) Date of publication of application: **13.06.2012**
(21) Application number: 11192289.4
(22) Date of filing: 07.12.2011
(51) Int. Cl.: G08G 1/123, G08G 1/16

(54) **Method and system for a vehicle for generating and sending an alarm about an accident**

(30) Priority: 13.12.2010 SE 1051311
(71) Applicant: Scania CV AB, 151 87 Södertälje (SE)
(72) Inventor: Claezon, Fredrich, SE-139 53 VÄRMDÖ (SE); Lindberg, Mikael, SE-171 42 SOLNA (SE); Kollegger, Peter, SE-416 73 GÖTEBORG (SE)

(57) **Abstract**

The invention relates to a method for a vehicle 1, comprising gathering current information about the vehicle's relationship to the surroundings by means of sensor systems on board the vehicle, using the information gathered about the vehicle as a basis for determining whether an accident is imminent, and generating and sending an alarm signal conveying a first signal package s1 if it is found that an accident is imminent, which first signal package contains information about the vehicle's identity, location and current time tₛ₁. The alarm signal is also arranged to be sent before the accident potentially occurs. The invention relates also to a system for a vehicle 1 provided with on-board sensor systems for gathering current information about the vehicle's relationship to the surroundings. The system comprises also a calculation unit 3 and an alarm unit 5.

## Description

### Field of the invention

The present invention relates to a method and a system for a vehicle according to the preambles of the independent claims.

### Background to the invention

In vehicles today, various different types of sensors and various different systems are used to gain information about a vehicle's relationship to the surroundings. There are for example both radar and lidar sensors which can by sending radar waves or invisible light assess how far away an object is. A freestanding camera or a camera in combination with sensors may also be used, and two cameras may be used to achieve a more reliable calculation. IR cameras for example may be used to assess whether an object in the vicinity of the vehicle is alive. Cameras may for example be used inter alia in so-called lane departure warning (LDW) systems which detect traffic lane lines and keep them monitored so that the vehicle does not stray beyond them.

Vehicles are also provided with sensor systems and methods for assessing whether the vehicle has crashed or not. Airbag sensors take the form of accelerometers which, in conjunction with logic, release airbags and belt tighteners. Sensors for detecting whether the vehicle might overturn (so-called rollover sensors) monitor whether it has overturned or is about to do so. This system is for example used to release a side airbag. There is also logic which uses electronic stability control, ESP or ABS to be able to brake the vehicle and thereby prevent an accident.

W02006/128502 refers to a method for a vehicle to detect an imminent accident with a vehicle ahead. The method uses the vehicle's sensor system to predict a potential accident and may also send a warning about it to the driver. The method includes evaluating the location of the vehicle ahead relative to the profile of the traffic lane in which the vehicle is travelling.

There is substantial risk that an accident might result in parts or the whole of the vehicle's sensor system and/or communication system disintegrating or not functioning properly, potentially leading for example to an alarm centre not being able to receive information about the vehicle and its location.

The object of the present invention is to propose an improved alarm system for situations where the vehicle's sensor system and/or communication system cease to function.

### Summary of the invention

The above objects are achieved with the invention defined by the independent claims.

Preferred embodiments are defined by the dependent claims.

In a first aspect, the invention relates to a method for a vehicle which comprises gathering of current information about the vehicle's relationship to the surroundings by means of on-board sensor systems, determining whether an accident is imminent on the basis of the information gathered about the vehicle, and generating and sending an alarm signal conveying a first signal package if it is found that an accident is imminent, which signal package contains information about the vehicle's identity, location and current time. The alarm signal is also adapted to being sent before the accident potentially occurs and, if it does occur, to generating a control signal which conveys information confirming that the accident has occurred and which is sent to the alarm centre.

Determining whether an accident is imminent for a vehicle and sending an alarm signal which conveys a first signal package to the alarm centre provides assurance that information about the vehicle is received by the alarm centre.

In a second aspect, the invention relates to a system for a vehicle provided with on-board sensor systems for gathering current information about the vehicle's relationship to the surroundings. The system comprises a calculation unit adapted to using the information gathered about the vehicle as a basis for determining whether an accident is imminent, and an alarm unit adapted to generating and sending an alarm signal which conveys a first signal package containing information about the vehicle's identity, location and current time. The alarm signal is also arranged to be sent before the accident potentially occurs, and the system comprises a control unit adapted to responding to the occurrence of an accident by generating a control signal which conveys information confirming that the accident has occurred.

### Brief description of drawings

- Figures 1a-b: illustrate a possible first scenario of a potentially imminent accident in a case where the accident does occur and a confirmation message is sent,
- Figures 2a-b: illustrate a possible second scenario of a potentially imminent accident in a case where the accident occurs but no confirmation message is sent,
- Figures 3a-b: illustrate a possible third scenario of a potentially imminent accident in a case where the accident does not occur and a negation message is sent,
- Figure 4: is a flowchart illustrating a method for a vehicle,
- Figure 5: is a flowchart illustrating an embodiment of a method for a vehicle, and
- Figure 6: depicts the constituent parts of a system for a vehicle.

### Detailed description of preferred embodiments of the invention

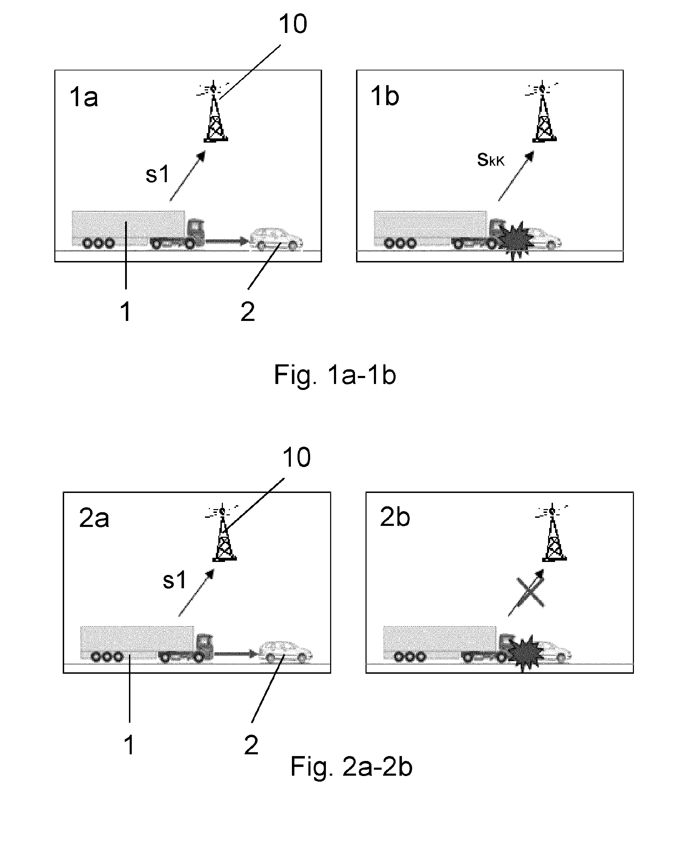

Figure 1a illustrates a possible first scenario of a potentially imminent accident with an object 2 which is ahead in the direction of travel in a case where a vehicle 1 sends a first signal package s1 containing the information about the vehicle. Figure 1b thereafter depicts an accident occurring and a confirmation message s_{kK} being sent from a control unit 6 in the vehicle 1.

Figure 2a illustrates a possible second scenario of a potentially imminent accident in a case where a vehicle 1 sends a first signal package s1 with the information about the vehicle. Figure 2b thereafter depicts the accident occurring but no confirmation message being sent. The reason for no confirmation message might for example be that the control unit 6 which would have sent it has disintegrated. Another reason for no confirmation message might be that the on-board sensor systems which gather data to serve as a basis for the control unit to create a control signal sₖ do not function properly after the accident.

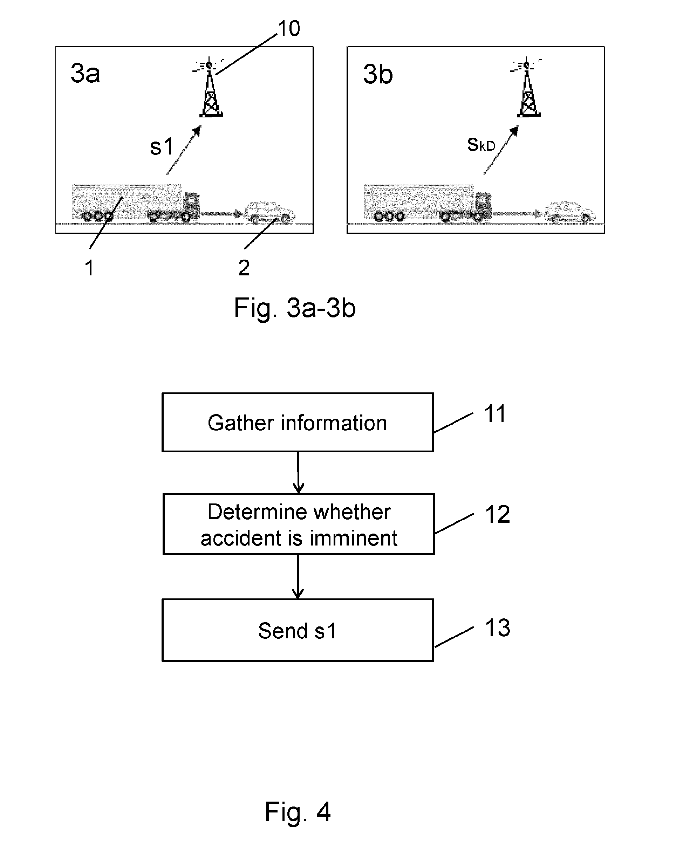

Figure 3a illustrates a possible third scenario of a potentially imminent accident in a case where a vehicle 1 sends a first signal package s1 with the information about the vehicle. Figure 3b thereafter depicts the accident not occurring and the control unit 6 consequently sending a negation message s_{kD}.

As illustrated in Figure 4, the invention relates to a method for a vehicle 1 which comprises
(11) gathering of current information about the vehicle's relationship to the surroundings by means of sensor systems on board the vehicle,
(12) using the information gathered about the vehicle as a basis for determining whether an accident is imminent, and
(13) generating and sending an alarm signal conveying a first signal package s1 which is based on the result of the comparison and contains information about the vehicle's identity, location and current time tₛ₁. The alarm signal is also arranged to be sent before the accident potentially occurs. As indicated at step (11), current information about the vehicle's relationship to the surroundings is gathered, comprising its movement relative to the surroundings and information about the surroundings, e.g. road information, state of road, weather, other vehicles, unprotected road users etc.

The method comprises step (12) being performed by calculating, on the basis of the information gathered about the vehicle, the probability X_{olycka} that an accident is imminent and comparing this calculated probability with a specific threshold value X_{tröskel}.

The value of the probability X_{olycka} that an accident is imminent will be between 0 and 1, where 0 means that there is no risk of an accident occurring and 1 means that an accident will occur. The parameters used in the current information about the vehicle's relationship to the surroundings mentioned above are used to calculate the probability that an accident is imminent. When for example the vehicle is travelling at high speed in a direction in the same lane as another vehicle travelling in the other direction and the distance between the two vehicles is short, the probability that an accident X_{olycka} is imminent will be close to 1.

In another situation where the vehicle may be travelling towards a stationary object ahead and its distance from that object is long the probability X_{olycka} will be set below 0.5.

The specific threshold value X_{tröskel} is settable and will usually be set at 0.5 but may be set higher or lower depending on various factors such as state of road, reliability of sensor systems or the like. If for example the road surface is slippery, the threshold value will be set lower than 0.5.

The method further comprises calculating the time t_{olycka} for the potentially imminent accident, and then using this calculated time t_{olycka} as a basis for calculating the probability X_{olycka} that the accident will occur. The method also comprises sending the first signal package s1 with the information about the vehicle at least a predetermined amount of time T₁ before the time t_{olycka} calculated for the potentially imminent accident. T₁ will be less than 1 second, preferably between 200 and 400 ms.

The method also comprises calculating the speed of the vehicle 1 relative to an object 2 in the direction of travel, and then using this relative speed as a basis for calculating the probability X_{olycka} that the accident will occur. The probability X_{olycka} that an accident will occur as a consequence of the vehicle skidding off the road might for example also be calculated on the basis of information gathered from LDW systems.

The alarm signal also conveys a second signal package s2. The method therefore comprises sending the second signal package s2 after the first signal package s1. The second signal package s2 contains information which is further to that in the first signal package s1 and which is gathered from various sensor systems of the vehicle. The second signal package s2 may be sent to the alarm centre before or after the accident.

The method further comprises the step of generating a control signal sₖ which contains information confirming/denying that the accident has occurred. This control signal sₖ is sent to the alarm centre 10.

The method also comprises assuming that an accident has occurred if the alarm centre does not receive the control signal sₖ within a period of time T_{2,} which is usually set at 10 seconds but might also be longer or, if so required, shorter.

The alarm signal is sent to the alarm centre 10 in the form of a radio signal or via the mobile network or in a similar way. Sending the alarm signal to the alarm centre thus takes place wirelessly.

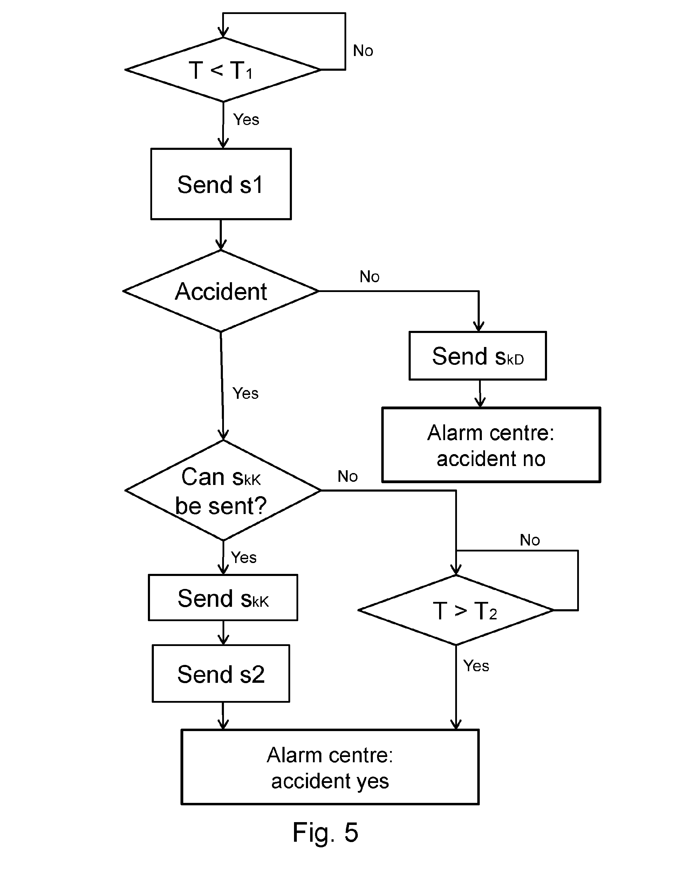

Figure 5 illustrates an embodiment of the method for the vehicle 1. An assessment is made of the period of time T to a potentially imminent accident. If this period is shorter than T₁, an alarm signal conveying a first signal package s1 is sent from an alarm unit 5 to an alarm centre 10. If thereafter no accident occurs, a control unit 6 sends a negation in the form of a control signal s_{kD} to the alarm centre.

If the accident occurs, the control unit 6 will try to transmit confirmation in the form of a control signal s_{kK} to the alarm centre 10. If this signal cannot be sent, the alarm centre will assume, after a period of time T which is longer than T₂, that an accident has occurred. If the control unit 6 has not been broken during the accident and neither the sensor systems from which it receives information, confirmation in the form of a control signal s_{kK} is sent to the alarm centre 10. Thereafter the alarm unit 5 will send a second signal package s2 to the alarm centre.

It is also conceivable that the second signal package s2 might not be sent after the accident has occurred but that the control unit 6 might be able to send confirmation in the form of a control signal s_{kK} to the alarm centre 10.

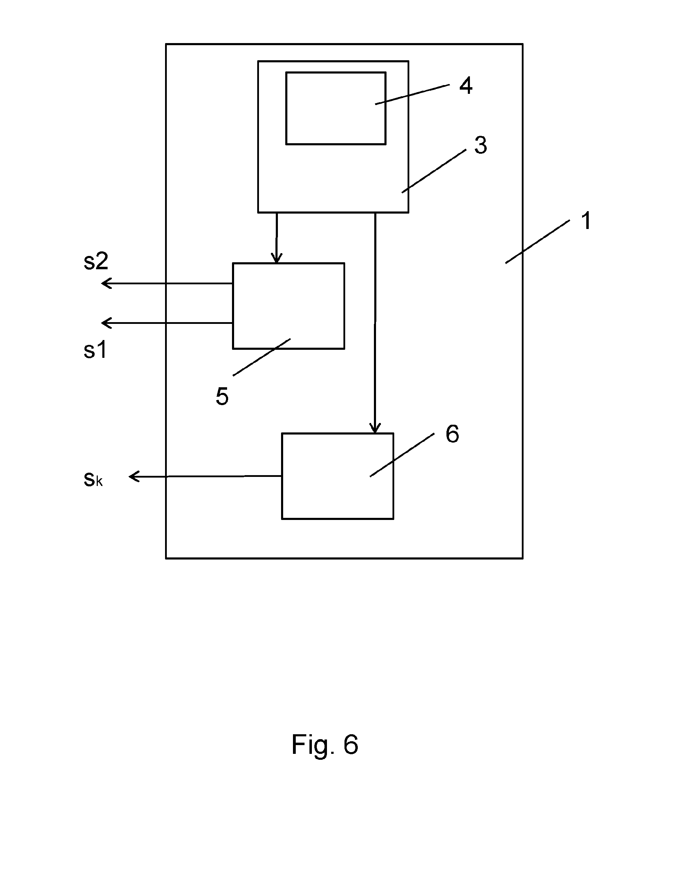

As depicted in Figure 6, the invention in a second aspect relates to a system for a vehicle 1 provided with on-board sensor systems for gathering current information about the vehicle's relationship to the surroundings. The system comprises a calculation unit 3 adapted to using the information gathered about the vehicle as a basis for determining whether an accident is imminent, and an alarm unit 5 adapted to generating and sending an alarm signal which conveys a first signal package s1 containing information about the vehicle's identity, location and current time tₛ₁. The alarm signal is also arranged to be sent before the accident potentially occurs. The system's calculation unit 3 is also adapted to using the information gathered about the vehicle as a basis for calculating the probability X_{olycka} that an accident is imminent.

The system is further characterised in that the calculation unit 3 comprises a time calculation unit 4 adapted to calculating the time t_{olycka} for the potentially imminent accident.

The alarm signal comprises a second signal package s2. This second signal package s2 contains information which is further to that in the first signal package s1 and which is gathered from various sensor systems of the vehicle. The second signal package s2 is also sent from the alarm unit 5.

The system comprises also a control unit 6 adapted to generating a control signal which conveys information confirming/denying that the accident has occurred.

Both the alarm unit 5 and the control unit 6 receive, from various sensor systems on board the vehicle and from the calculation unit 3, information to serve as a basis for generating and sending alarm signals and control signals.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A method for a vehicle (1) comprising
(11) gathering current information about the vehicle's relationship to the surroundings by means of sensor systems on board the vehicle (1),
(12) using the information gathered about the vehicle as a basis for determining whether an accident is imminent, and
(13) generating and sending an alarm signal conveying a first signal package (s1) if it is found that an accident is imminent, which package contains information about the vehicle's identity, location and current time (tₛ₁), which alarm signal is also arranged to be sent before the accident potentially occurs, and generating, if the accident does occur, a control signal (sₖ) which contains information confirming that the accident has occurred and which is sent to an alarm centre (10).

2. A method according to claim 1, comprising a step (12) performed by
- calculating, on the basis of the information gathered about the vehicle, the probability (X_{olycka}) that an accident is imminent and
- comparing this calculated probability (X_{olycka}) with a specific threshold value (X_{tröskel}),
the first signal package (s1) being generated and sent on the basis of the results of the comparison.

3. A method according to claim 2, comprising
- calculating the time (t_{olycka}) of the potentially imminent accident, and
- calculating, on the basis of this calculated time (t_{olycka}), the probability (X_{olycka}) that the accident will occur.

4. A method according to claim 3, comprising sending the first signal package (s1) with the information about the vehicle at least a predetermined amount of time (T₁) before the calculated time (t_{olycka}) of the potentially imminent accident.

5. A method according to claim 1, comprising the steps of
- calculating the speed of the vehicle (1) relative to an object (2) in the direction of travel, and
- calculating, on the basis of this relative speed, the probability (X_{olycka}) that the accident will occur.

6. A method according to any one of the foregoing claims, whereby the alarm signal conveys a second signal package (s2), which method comprises the step of sending the second signal package (s2) after the first signal package (s1), which second signal package (s2) contains information which is further to that in the first signal package (s1) and which is gathered from various sensor systems of the vehicle.

7. A method according to any one of the foregoing claims, comprising the step of generating a control signal (sₖ) which contains information denying that the accident has occurred and which is sent to the alarm centre (10).

8. A method according to claim 7, comprising the step of assuming that an accident has occurred if the alarm centre (10) does not receive the control signal (sₖ) within a period of time (T₂).

9. A method according to claim 1, comprising the step of sending the alarm signal to the alarm centre (10) in the form of a radio signal or via the mobile network or in a similar way.

10. A system for a vehicle (1) comprising sensor systems on board the vehicle (1) for gathering current information about the vehicle's relationship to the surroundings, which system comprises
- a calculation unit (3) adapted to using the information gathered about the vehicle as a basis for determining whether an accident is imminent, and
- an alarm unit (5) adapted to generating and sending an alarm signal which conveys a first signal package (s1) containing information about the vehicle's identity, location and current time (tₛ₁) and is arranged to be sent before the accident potentially occurs, **characterised in that** the system comprises a control unit (6) adapted to generating, if an accident occurs, a control signal (sₖ) containing information which confirms that the accident has occurred.

11. A system according to claim 10, **characterised in that** the calculation unit (3) is adapted to calculating the probability (X_{olycka}) that the accident is imminent.

12. A system according to claim 11, **characterised in that** the calculation unit (3) comprises a time calculation unit (4) adapted to calculating the time (X_{olycka}) for the potentially imminent accident.

13. A system according to any one of claims 10 to 12, **characterised in that** the alarm signal conveys a second signal package (s2) containing information which is further to that in the first signal package (s1) and which is gathered from various sensor systems of the vehicle.

14. A system according to any one of claims 10 to 13, **characterised in that** it comprises a control unit (6) adapted to generating a control signal (sₖ) containing information which denies that the accident has occurred.
